# EUROPEAN PATENT SPECIFICATION

(11) **EP 4 488 132 B1**
(45) Date of publication and mention of the grant of the patent: **19.11.2025**
(21) Application number: 23709270.5
(22) Date of filing: 10.02.2023
(51) Int. Cl.: B60T 13/68, B62L 3/02

(54) **HYDRAULIC CONTROL UNIT, METHOD FOR MANUFACTURING HYDRAULIC CONTROL UNIT**
HYDRAULISCHE DRUCKSTEUEREINHEIT UND HERSTELLUNGSVERFAHREN DER HYDRAULISCHEN DRUCKSTEUEREINHEIT
UNITÉ DE CONTRÔLE DE PRESSION HYDRAULIQUE ET PROCÉDÉ DE FABRICATION D'UNITÉ DE CONTRÔLE DE PRESSION HYDRAULIQUE

(30) Priority: 28.02.2022 JP 2022029655
(43) Date of publication of application: 08.01.2025
(73) Proprietor: Robert Bosch GmbH, 70442 Stuttgart (DE)
(72) Inventor: NAKAMAE, Chihaya, Yokohama-shi, Kanagawa 224-8501 (JP)
(86) International application number: PCT/IB2023/051211
(87) International publication number: WO 2023/161756

(56) References cited:
- WO-A1-2021/038376
- DE-A1- 102020 209 116
- DE-A1- 102020 214 528
- US-A1- 2014 015 221
- US-A1- 2018 170 333
- US-A1- 2021 114 573

## Description

### Technical Field

The present invention relates to a hydraulic pressure control unit of a braking system that is mounted to a straddle riding-type vehicle, and a manufacturing method of the hydraulic pressure control unit of the braking system that is mounted to the straddle riding-type vehicle.

### Background Art

Some conventional vehicles are provided with a braking system that controls the braking force of wheels by controlling the pressure of a brake fluid. The braking system is provided with a hydraulic pressure control unit. The hydraulic pressure control unit is provided with a base in which a flow path of the brake fluid is formed, a circuit substrate that controls driving of a hydraulic pressure adjusting valve to open and close the flow path of the brake fluid, and a housing in which the circuit substrate is housed. The housing is connected to the base with a bolt (see PTL 1). PTL 2 describes a hydraulic control unit of a brake system installed in a saddle-type vehicle, comprising a coil unit used for opening and closing a flow path of brake fluid, a housing in which the coil unit is housed, a platform held by the housing, and a base having a top surface to which the coil unit and the housing are connected.

### Citation List

### Patent Literature

PTL 1: JP2018-83572A
PTL 2: WO 2021/038376 A1

### Summary of Invention

### Technical Problem

Herein, a straddle riding-type vehicle, which is one type of the vehicles, has stronger constraints about a layout of components, compared with other vehicles such as automobiles, and has a lower degree of freedom of mounting the hydraulic pressure control unit, for example. Accordingly, a request of downsizing with respect to the hydraulic pressure control unit to be mounted to the straddle riding-type vehicle is especially strong. Herein, the bolt is provided with an external screw formation portion in which an external screw is formed, and a head portion to which a tool is coupled. When the width in a direction orthogonal to an axial direction of the bolt is set as a transverse width, the transverse width of the head is large. In other words, the downsizing of the conventional hydraulic pressure control unit can be difficult due to the structure of the connection portion that connects the base to the housing in some cases.

The invention is made in view of the abovementioned problems, and aims to obtain a hydraulic pressure control unit capable of responding to a request of downsizing. Moreover, the invention is to obtain a manufacturing method of such a hydraulic pressure control unit.

### Solution to Problem

The invention is set out in the appended set of claims.

A hydraulic pressure control unit according to the invention is a hydraulic pressure control unit of a braking system to be mounted to a straddle riding-type vehicle, and is provided with, a base in which a flow path of a brake fluid is formed, a circuit substrate that controls driving of a hydraulic pressure adjusting valve to open and close the flow path, a housing in which the circuit substrate is housed, and a connection portion that connects the base to the housing, in which the connection portion is provided with a recessed portion that is formed in the base, and a pin that is held by the housing and includes an end portion that is press-fitted into the recessed portion, a through-hole is formed in the end portion that is press-fitted into the recessed portion, an outer periphery of the through-hole is defined by a first branch portion and a second branch portion, both ends thereof being connected to each other, of the end portion that is press-fitted into the recessed portion, and a reinforcing member independent of the base and the pin is brought into contact with and presses against at least either one of the first branch portion and the second branch portion.

A manufacturing method of a hydraulic pressure control unit according to the invention is a manufacturing method of a hydraulic pressure control unit of a braking system to be mounted to a straddle riding-type vehicle, the hydraulic pressure control unit including a base to which a flow path of a brake fluid is formed, a circuit substrate that controls driving of a hydraulic pressure adjusting valve to open and close the flow path, and a housing in which the circuit substrate is housed, and includes: press-fitting an end portion of a pin held by the housing into a recessed portion formed in the base to connect the base to the housing; forming a through-hole in the end portion that is press-fitted into the recessed portion; defining an outer periphery of the through-hole by a first branch portion and a second branch portion, both ends thereof being connected to each other, of the end portion that is press-fitted into the recessed portion; and press-fitting a reinforcing member independent of the base and the pin into a transverse hole extending from an outer surface of the base to the recessed portion into which the end portion is press-fitted, and bringing and pressing the reinforcing member into contact with and against at least either one of the first branch portion and the second branch portion.

### Advantageous Effects of Invention

In the hydraulic pressure control unit according to the invention, the end portion of the pin held by the housing is press-fitted into the recessed portion formed in the base, so that the base is connected to the housing. In other words, the connection portion between the base and the housing can be implemented as a compact structure, so that the possibility of the downsizing is improved. Moreover, the reinforcing member independent of the base and the pin is brought into contact with and presses against at least either one of the first branch portion and the second branch portion that define the outer periphery of the through-hole formed in the end portion of the pin. Therefore, the possibility of the downsizing is improved, and the improvement in the durability of the connection is to be attained.

### Brief Description of Drawings

Fig. 1 is a diagram illustrating a schematic configuration of a bicycle to which a braking system according to an embodiment of the invention is mounted.
Fig. 2 is a diagram illustrating a schematic configuration of the braking system according to the embodiment of the invention.
Fig. 3 is a diagram in which an inside of a hydraulic pressure control unit according to the embodiment of the invention is observed from the side.
Fig. 4 is a diagram in which the inside of the hydraulic pressure control unit according to the embodiment of the invention is observed from the upper side.
Fig. 5 is a diagram in which the inside of the hydraulic pressure control unit according to the embodiment of the invention is observed from the side.
Fig. 6 is a diagram in which the inside of the hydraulic pressure control unit according to the embodiment of the invention is observed from the side.
Fig. 7 is a diagram in which the inside of the hydraulic pressure control unit according to the embodiment of the invention is observed from the side.
Fig. 8 is a diagram in which the inside of the hydraulic pressure control unit according to the embodiment of the invention is observed from the side.
Fig. 9 is a diagram in which the inside of the hydraulic pressure control unit according to the embodiment of the invention is observed from the side.

### Description of Embodiments

A hydraulic pressure control unit according to the invention will be described with reference to the drawings below.

Note that, a case where the invention is employed to a bicycle (for example, a two-wheeled vehicle, a three-wheeled vehicle, or the like) will be described herein, but the invention may be employed to other straddle riding-type vehicles than the bicycle. Examples of other straddle riding-type vehicles than the bicycle include a two-wheeled motor vehicle, a three-wheeled motor vehicle, and a buggy, each of which uses at least one of an engine and an electric motor as a drive source. The bicycle indicates a general vehicle capable of traveling on a road by a pressing force to be applied to a pedal. Examples of the bicycle include a usual bicycle, an electric assist bicycle, and an electric bicycle. Moreover, the two-wheeled motor vehicle or the three-wheeled motor vehicle indicates a so-called motorcycle, and examples of the motorcycle include a motorcycle, a scooter, and an electric scooter.

Note that, the configuration, the operation, and the like to be described below are examples, and the hydraulic pressure control unit according to the invention is not limited to that having such the configuration, the operation, and the like. For example, a case where the hydraulic pressure control unit according to the invention is of a pump-less type is described below, however, the hydraulic pressure control unit according to the invention may be provided with a pump that assists a flow of a brake fluid. Moreover, a case where a braking system according to the invention executes anti-lock brake control only to a braking force that is generated in a front wheel is described below, however, the braking system according to the invention may execute the anti-lock brake control only to a braking force that is generated in a rear wheel, and may execute the anti-lock brake control to both of the braking force that is generated in the front wheel and the braking force that is generated in the rear wheel.

Moreover, in the respective drawings, the same reference numerals are assigned to the same or similar members or portions, or the assignment of the reference numerals is omitted. Moreover, the illustration of detailed structures is simplified or omitted as appropriate. Moreover, redundant descriptions are simplified or omitted as appropriate.

### <Mounting of Braking System to Bicycle>

The mounting of a braking system according to an embodiment to a bicycle will be described.

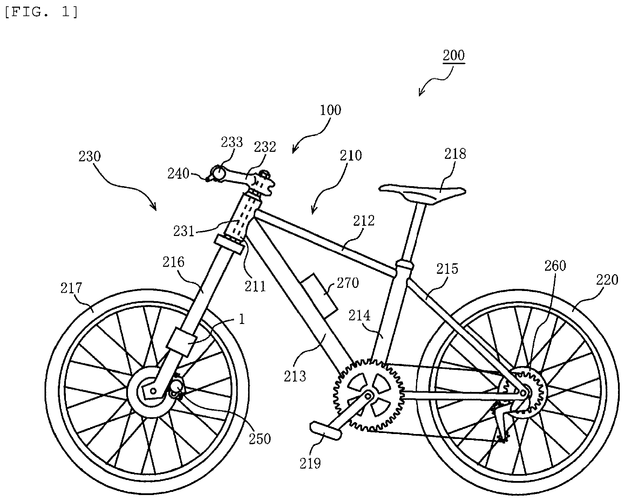

Fig. 1 is a diagram illustrating a schematic configuration of the bicycle to which the braking system according to the embodiment of the invention is mounted. Note that, Fig. 1 illustrates a case where a bicycle 200 is a two-wheeled vehicle, but the bicycle 200 may be another bicycle such as a three-wheeled vehicle.

The bicycle 200 serving as one example of a straddle riding-type vehicle is provided with a frame 210, a turning portion 230, a saddle 218, pedals 219, a rear wheel 220, and a rear wheel braking portion 260.

The frame 210 includes, for example, a head tube 211 that pivotally supports a steering column 231 of the turning portion 230, a top tube 212 and a down tube 213 that are coupled to the head tube 211, a seat tube 214 that is coupled to the top tube 212 and the down tube 213, and holds the saddle 218, and a stay 215 that is coupled to upper and lower ends of the seat tube 214, and holds the rear wheel 220 and the rear wheel braking portion 260.

The turning portion 230 includes the steering column 231, a handle-stem 232 that is held by the steering column 231, a handlebar 233 that is held by the handle-stem 232, a braking operation portion 240 that is attached to the handlebar 233, front forks 216 that are coupled to the steering column 231, a front wheel 217 that is rotatably held by the front forks 216, and a front wheel braking portion 250. The front forks 216 are provided on both sides of the front wheel 217. One end of the front fork 216 is coupled to the steering column 231, and the other end thereof is connected to the rotation center of the front wheel 217.

The braking operation portion 240 includes a mechanism that is used as an operation portion of the front wheel braking portion 250, and a mechanism that is used as an operation portion of the rear wheel braking portion 260. For example, the mechanism that is used as the operation portion of the front wheel braking portion 250 is disposed to a right end side of the handlebar 233, and the mechanism that is used as the operation portion of the rear wheel braking portion 260 is disposed to a left end side of the handlebar 233.

A hydraulic pressure control unit 1 is coupled to the front fork 216 of the turning portion 230. The hydraulic pressure control unit 1 is a unit that controls the pressure of a brake fluid of the front wheel braking portion 250. Note that, the rear wheel braking portion 260 may be a braking portion of the type that generates a braking force by increasing the pressure of the brake fluid, or may be a braking portion of the type that mechanically generates a braking force (for example, a braking portion of the type that generates a braking force by causing a tension to generate in the wire, or the like).

For example, a power supply unit 270 serving as a power supply of the hydraulic pressure control unit 1 is attached to the down tube 213 of the frame 210. The power supply unit 270 may be a battery, or may be a power generator. Examples of the power generator include a power generator that generates power by the traveling of the bicycle 200 (for example, a hub dynamo that generates power by the rotation of the front wheel 217 or the rear wheel 220, a power generator that is a motor of a drive source of the front wheel 217 or the rear wheel 220, and generates regenerative electric power, and the like), a power generator that generates power by sunlight, and the like.

In other words, a braking system 100 at least including the braking operation portion 240, the front wheel braking portion 250, the hydraulic pressure control unit 1, and the power supply unit 270 is mounted to the bicycle 200. The braking system 100 controls the pressure of the brake fluid in the front wheel braking portion 250 by the hydraulic pressure control unit 1 to allow the execution of anti-lock brake control.

### <Configuration of Braking System>

A configuration of a braking system according to the embodiment will be described.

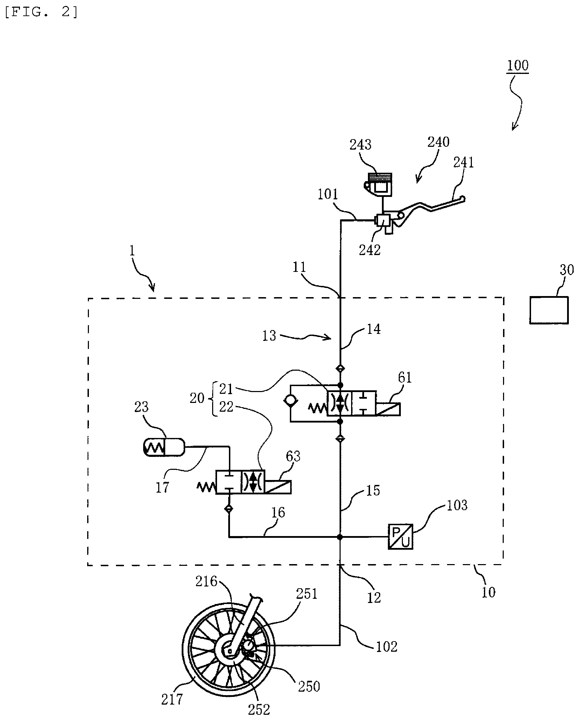

Fig. 2 is a diagram illustrating a schematic configuration of the braking system according to the embodiment of the invention.

The hydraulic pressure control unit 1 is provided with a base 10. In the base 10, a master cylinder port 11, a wheel cylinder port 12, and a flow path 13 that causes the master cylinder port 11 and the wheel cylinder port 12 to communicate with each other are formed.

The flow path 13 is a flow path of the brake fluid. The flow path 13 includes a first flow path 14, a second flow path 15, a third flow path 16, and a fourth flow path 17. The master cylinder port 11 and the wheel cylinder port 12 communicate with each other via the first flow path 14 and the second flow path 15. Moreover, an end portion at an inlet side of the third flow path 16 is connected to a middle portion of the second flow path 15.

The braking operation portion 240 is connected to the master cylinder port 11 via a liquid pipe 101. The braking operation portion 240 includes a brake lever 241, a master cylinder 242, and a reservoir 243. The master cylinder 242 is provided with a piston portion (not illustrated) that moves in conjunction with an operation of the brake lever 241 by a user, and is connected to the first flow path 14 at an inlet side thereof via the liquid pipe 101 and the master cylinder port 11. The pressure of the brake fluid in the first flow path 14 increases or decreases due to the movement of the piston portion. Moreover, the brake fluid in the master cylinder 242 is accumulated in the reservoir 243.

The front wheel braking portion 250 is connected to the wheel cylinder port 12 via a liquid pipe 102. The front wheel braking portion 250 includes a wheel cylinder 251 and a rotor 252. The wheel cylinder 251 is attached to a lower end portion of the front fork 216. The wheel cylinder 251 is provided with a piston portion (not illustrated) that moves in conjunction with the pressure of the brake fluid in the liquid pipe 102, and is connected to the second flow path 15 at an outlet side thereof via the liquid pipe 102 and the wheel cylinder port 12. The rotor 252 is held by the front wheel 217, and rotates together with the front wheel 217. With the movement of the piston portion, a brake pad (not illustrated) is pressed against the rotor 252, whereby the front wheel 217 is braked.

Moreover, the hydraulic pressure control unit 1 is provided with a hydraulic pressure adjusting valve 20 that opens and closes the flow path 13. In the embodiment, the hydraulic pressure control unit 1 is provided with an inlet valve 21 and an outlet valve 22, as the hydraulic pressure adjusting valve 20. The inlet valve 21 is provided between the first flow path 14 at an outlet side thereof and the second flow path 15 at an inlet side thereof, and opens and closes the circulation of the brake fluid between the first flow path 14 and the second flow path 15. The outlet valve 22 is provided between the third flow path 16 at an outlet side thereof and the fourth flow path 17 at an inlet side thereof, and opens and closes the circulation of the brake fluid between the third flow path 16 and the fourth flow path 17. The pressure of the brake fluid is controlled by the opening and closing operations of the inlet valve 21 and the outlet valve 22.

Moreover, the hydraulic pressure control unit 1 is provided with a coil 61 that drives the inlet valve 21, and a coil 63 that drives the outlet valve 22. For example, when the coil 61 is in a no-energization state, the inlet valve 21 opens a bidirectional flow of the brake fluid. Further, when the coil 61 is energized, the inlet valve 21 becomes in a closed state and interrupts the flow of the brake fluid. In other words, in the embodiment, the inlet valve 21 is an electromagnetic valve that is open in the no-energization. Moreover, for example, when the coil 63 is in the no-energization state, the outlet valve 22 interrupts the flow of the brake fluid. Further, when the coil 63 is energized, the outlet valve 22 becomes in an open state and opens the bidirectional flow of the brake fluid. In other words, in the embodiment, the outlet valve 22 is an electromagnetic valve that is closed in the no-energization.

Moreover, the hydraulic pressure control unit 1 is provided with an accumulator 23. The brake fluid passed through the outlet valve 22 is accumulated in the accumulator 23, which is connected to the fourth flow path 17 at an outlet side thereof.

Moreover, the hydraulic pressure control unit 1 is provided with a hydraulic pressure sensor 103 for detecting the pressure of the brake fluid in the wheel cylinder 251. The hydraulic pressure sensor 103 is provided to the second flow path 15 or the third flow path 16.

Moreover, the hydraulic pressure control unit 1 is provided with a control portion 30. Signals from various kinds of sensors such as the hydraulic pressure sensor 103, a wheel speed sensor (not illustrated) for detecting a rotation speed of the front wheel 217, and the like are input into the control portion 30. Note that, the respective portions of the control portion 30 may be collectively disposed or may be disposed in a distributed manner. The control portion 30 may include, for example, a microcomputer, a microprocessor unit, or the like, may include an updatable component such as firmware, and may include a program module or the like that is executed by a command from the CPU or the like.

The control portion 30 controls the energization to the coil 61 and the coil 63. Specifically, the control portion 30 controls the energization to the coil 61 to control driving (opening and closing operation) of the inlet valve 21. Moreover, the control portion 30 controls the energization to the coil 63 to control driving (opening and closing operation) of the outlet valve 22. In other words, the control portion 30 controls the opening and closing operations of the inlet valve 21 and the outlet valve 22 to control the pressure of the brake fluid in the wheel cylinder 251, in other words, a braking force of the front wheel 217.

Note that, in the embodiment, a circuit substrate 31, which is described later, of the control portion 30 controls the energization to at least the coil 61 and the coil 63. In other words, the circuit substrate 31 controls the energization to the coil 61 and the coil 63 to control the driving of the inlet valve 21 and the outlet valve 22.

For example, while the front wheel 217 is braked by the operation of the brake lever 241 by the user, when the control portion 30 determines that there is locking of the front wheel 217 or a possibility of the locking from signals of the wheel speed sensor (not illustrated), the control portion 30 starts anti-lock brake control.

When the anti-lock brake control is started, the control portion 30 causes the coil 61 to be in the energization state to close and stop the inlet valve 21, and interrupts the flow of the brake fluid from the master cylinder 242 to the wheel cylinder 251, thereby suppressing an increase in the pressure of the brake fluid in the wheel cylinder 251. In contrast, the control portion 30 causes the coil 63 to be in the energization state to open the outlet valve 22, and allows the flow of the brake fluid from the wheel cylinder 251 to the accumulator 23, thereby reducing the pressure of the brake fluid in the wheel cylinder 251. This cancels or avoids the locking of the front wheel 217. If the control portion 30 determines that the pressure of the brake fluid in the wheel cylinder 251 has been reduced to a predetermined value from signals of the hydraulic pressure sensor 103, the control portion 30 causes the coil 63 to be in the no-energization state to close and stop the outlet valve 22, and causes the coil 61 to be in the no-energization state to open the inlet valve 21 for a short period of time, thereby increasing the pressure of the brake fluid in the wheel cylinder 251. The control portion 30 may increase or decrease the pressure in the wheel cylinder 251 only once or may repeat a plurality of times.

When the anti-lock brake control ends and the brake lever 241 is returned, the inside of the master cylinder 242 becomes in an atmosphere pressure state, and the brake fluid in the wheel cylinder 251 is returned. Moreover, when the anti-lock brake control has ended and the brake lever 241 has been returned, the control portion 30 causes the outlet valve 22 to be in the open state. When the pressure of the brake fluid in the flow path 13 becomes lower than the pressure of the brake fluid accumulated in the accumulator 23, the brake fluid accumulated in the accumulator 23 is discharged to the outside of the accumulator 23 in a boost-less manner (in other words, in a pump-less manner), is returned to the inside of the flow path 13, and is returned to the master cylinder 242.

### <Configuration of Hydraulic Pressure Control Unit>

The hydraulic pressure control unit according to the embodiment of the braking system will be described.

Note that, as will be described later, the hydraulic pressure control unit 1 provided with the base 10, and a housing 40 connected to the base 10. Hereinafter, the configuration of the hydraulic pressure control unit 1 will be described while the hydraulic pressure control unit 1 in a state where the housing 40 is disposed on the base 10 is observed.

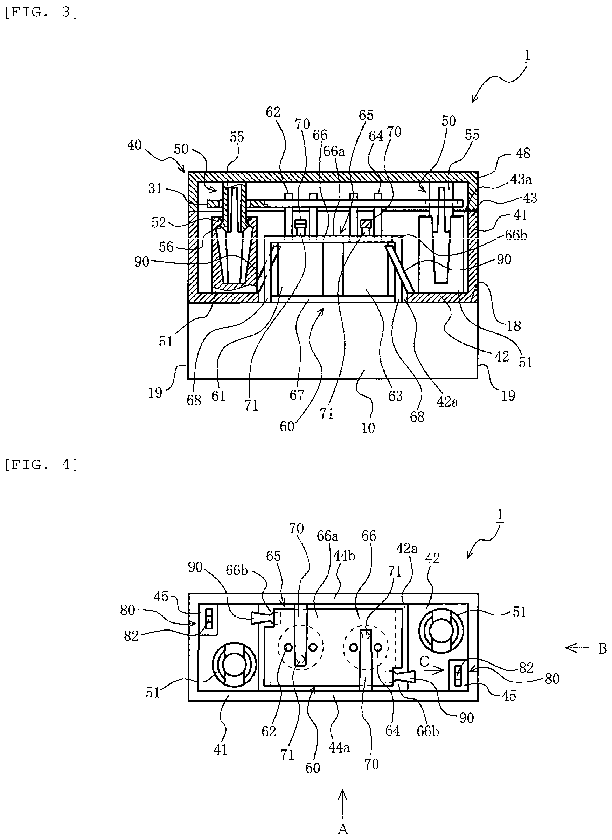

Fig. 3 is a diagram in which the inside of the hydraulic pressure control unit according to the embodiment of the invention is observed from the side. Specifically, Fig. 3 is a diagram of the hydraulic pressure control unit 1 observed from an arrow A direction in Fig. 4, and is a diagram of the hydraulic pressure control unit 1 observed by deleting a portion at a front surface side of the housing 40 in the arrow A direction. In other words, Fig. 3 is a diagram in which the inside of the hydraulic pressure control unit 1 in a state where the housing 40 is disposed on the base 10 is observed from the side. Note that, in Fig. 4, a pair of connection portions 80 are illustrated. In Fig. 3, the illustration of the connection portions 80 is omitted. Moreover, in Fig. 3, a part of one of a plurality of lid fixing portions 50 and a part of the circuit substrate 31 are illustrated as cross sections.

Fig. 4 is a diagram in which the inside of the hydraulic pressure control unit according to the embodiment of the invention is observed from the upper side. Specifically, Fig. 4 is a diagram of the hydraulic pressure control unit 1 in a state where a lid 48 of the housing 40 and the circuit substrate 31 are removed is observed from the upper side.

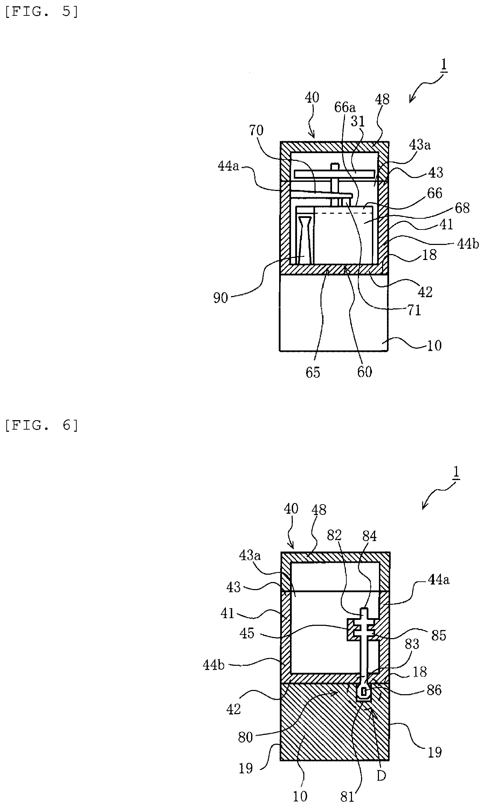

Fig. 5 is a diagram in which the inside of the hydraulic pressure control unit according to the embodiment of the invention is observed from the side. Specifically, Fig. 5 is a diagram of the hydraulic pressure control unit 1 observed from an arrow B direction in Fig. 4, and is a diagram of the hydraulic pressure control unit 1 observed by deleting a portion at a front surface side of the housing 40 in the arrow B direction. In other words, Fig. 5 is a diagram in which the inside of the hydraulic pressure control unit 1 in a state where the housing 40 is disposed on the base 10 is observed from the side. Note that, in Fig. 5, the illustration of the lid fixing portion 50 and the connection portion 80 that are positioned in front of a coil unit 60 in the arrow B direction in Fig. 4 is omitted.

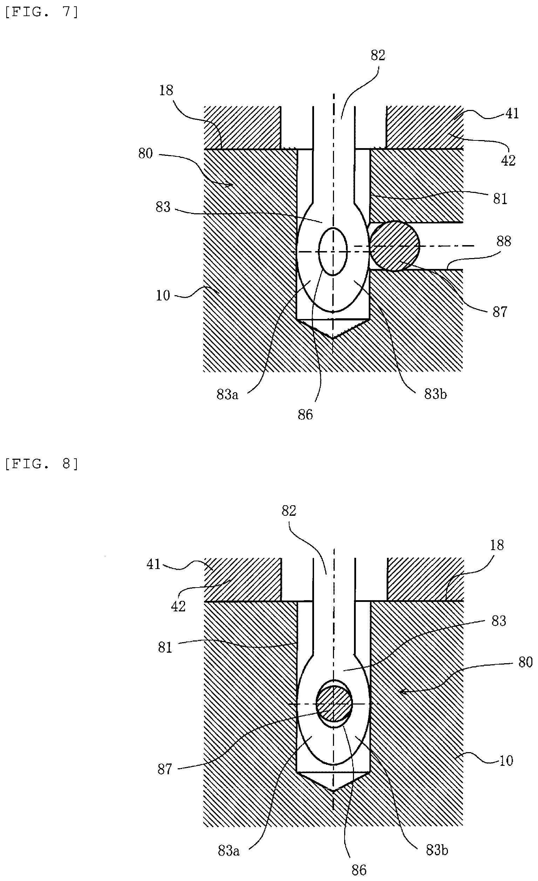

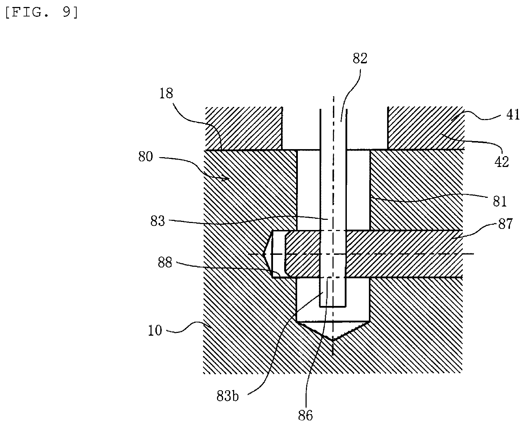

Figs. 6 to 9 are diagrams in which the inside of the hydraulic pressure control unit according to the embodiment of the invention is observed from the side. Specifically, Fig. 6 is a diagram of the connection portion 80 of the hydraulic pressure control unit 1 observed in an arrow C direction in Fig. 4. In other words, Fig. 6 is a diagram in which the inside of the hydraulic pressure control unit 1 in a state where the housing 40 is disposed on the base 10 is observed from the side. Figs. 7 and 8 are partial enlargement diagrams illustrating details of a D part in Fig. 6. Fig. 9 is a diagram of the location illustrated in Fig. 8 observed in the arrow A direction. Note that, Figs. 6 to 9 are cross-sectional diagrams of a surface passing through the center of a pin 82, however, the pin 82 is not illustrated as a cross-section for clarification.

Hereinafter, with reference to Figs. 3 to 6, the configuration of the hydraulic pressure control unit 1 according to the embodiment will be described.

The hydraulic pressure control unit 1 is provided with the base 10, the housing 40, the coil unit 60, and the circuit substrate 31.

The base 10 is, for example, a member of an approximately rectangular parallelepiped that uses an aluminum alloy as a raw material. The housing 40 is connected to an upper surface 18 of the base 10. In the embodiment, the housing 40 is connected to the upper surface 18 of the base 10 by bonding. The base 10 is connected to the housing 40 by bonding to allow the airtightness between the base 10 and the housing 40 to be improved. Note that, each surface of the base 10 may be flat, may include a curved portion, or may include a level difference.

The housing 40 has a box shape of an approximately rectangular parallelepiped, for example. In the embodiment, the housing 40 is formed of resin. In other words, the housing 40 is a resin molded article. The coil unit 60 and the circuit substrate 31 are housed in the inside of the housing 40. Moreover, the housing 40 according to the embodiment is provided with a main body portion 41 and the lid 48. A lower surface portion 42 of the main body portion 41 is connected to the upper surface 18 of the base 10 by bonding. Moreover, in the main body portion 41, an opening portion 43a is formed in a region that is opposed to the circuit substrate 31. In the embodiment, the opening portion 43a is formed in an upper surface portion 43 of the main body portion 41. The lid 48 is a member that covers the opening portion 43a of the main body portion 41. In the embodiment, the lid 48 is connected to the main body portion 41 by bonding. Specifically, a lower surface portion of the lid 48 is bonded to a periphery of the opening portion 43a in the upper surface portion 43 of the main body portion 41. The lid 48 is connected to the main body portion 41 by bonding to allow the airtightness between the lid 48 and the main body portion 41 to be improved.

The coil unit 60 is provided with coils that drive the hydraulic pressure adjusting valve 20. In other words, the coil unit 60 is provided with the coil 61 and the coil 63. Moreover, the coil unit 60 is provided with a coil housing 65 that holds the coil 61 and the coil 63. In the embodiment, the coil housing 65 is provided with an upper surface portion 66 that is disposed above the coil 61 and the coil 63, a lower surface portion 67 that is disposed below the coil 61 and the coil 63, and side surface portions 68 that connect the upper surface portion 66 to the lower surface portion 67. Note that, in the embodiment, in corner portions of the upper surface portion 66 in the coil housing 65, notches 66b are formed in the corner portions that are in the vicinity of stands 90, which are described later. Further, the side surface portions 68 of the coil housing 65 respectively connect the locations in which the notches 66b are not formed in the upper surface portion 66 to the lower surface portion 67.

The coil unit 60 is connected to the upper surface 18 of the base 10. In the embodiment, the coil unit 60 is connected to the upper surface 18 of the base 10 by bonding. Specifically, in the lower surface portion 42 of the main body portion 41 in the housing 40, an opening portion 42a is formed at a position that is opposed to the coil unit 60. Moreover, the coil unit 60 is passed through the opening portion 42a in the lower surface portion 42 of the main body portion 41. Further, the lower surface portion 67 of the coil housing 65 is connected to the upper surface 18 of the base 10 by bonding.

The circuit substrate 31 is arranged above the coil unit 60. The circuit substrate 31 is electrically connected to connection terminals 62 of the coil 61 and connection terminals 64 of the coil 63. Accordingly, the circuit substrate 31 is configured to be able to control the energization to the coil 61 and the coil 63.

Herein, as illustrated in Figs. 3 to 5, the hydraulic pressure control unit 1 according to the embodiment is provided with at least one arm 70 made of resin. The embodiment indicates an example in which the two arms 70 are provided. One end of one of these arms 70 is held by a first side surface portion 44a that is one of side surface portions in the main body portion 41 of the housing 40. Moreover, one end of the other arm 70 is held by a second side surface portion 44b that is the side surface portion opposed to the first side surface portion 44a in the main body portion 41. Further, these arms 70 are in contact with an upper surface 66a in the upper surface portion 66 of the coil housing 65. In other words, these arms 70 are in contact with a surface opposed to a bonding surface to the base 10, in the coil unit 60. The arm 70 according to the embodiment is provided with a protrusion 71 that protrudes downwardly in the vicinity of an end portion at an opposite side of a side of the arm 70 that is held by the housing 40. Further, the protrusion 71 is in contact with the upper surface 66a in the upper surface portion 66 of the coil housing 65. In other words, in the embodiment, the protrusion 71 serves as a contact location in the arm 70 with the coil unit 60.

Specifically, immediately after the hydraulic pressure control unit 1 has been assembled, in other words, in a state where an adhesive that bonds the base 10 to the coil unit 60 has not yet set, the protrusion 71 is pressed upwardly by the upper surface 66a in the upper surface portion 66 of the coil housing 65, so that the arm 70 is configured to be elastically deformed. Accordingly, in a state where the adhesive that bonds the base 10 to the coil unit 60 has not set, the coil unit 60 can be pressed toward the base 10 by a reaction force of the arm 70. Therefore, in the hydraulic pressure control unit 1 according to the embodiment, the coil unit 60 can be fixed to the base 10 by bonding.

As illustrated in Figs. 3 and 4, the hydraulic pressure control unit 1 according to the embodiment is provided with at least one lid fixing portion 50 that fixes the lid 48 to the main body portion 41 of the housing 40. The embodiment indicates an example in which the two lid fixing portions 50 are provided. The lid fixing portion 50 is provided in an inside of a space surrounded by the main body portion 41 and the lid 48. Moreover, the lid fixing portion 50 is provided with an engaged portion 51, and an engaging portion 55 that is engaged with the engaged portion 51. The engaged portion 51 is held by either one of the main body portion 41 and the lid 48. The engaging portion 55 is held by the other of the main body portion 41 and the lid 48. The embodiment indicates an example in which the engaged portion 51 is held by the main body portion 41, and the engaging portion 55 is held by the lid 48. Note that, in the embodiment, in the two configurations that are engaged with each other when the lid 48 is fixed to the main body portion 41, the configuration having higher rigidity serves as the engaged portion 51, and the configuration having lower rigidity serves as the engaging portion 55.

Note that, as the specific structure of the engaged portion 51 and the engaging portion 55 in the lid fixing portion 50, various structures that are employed in a conventional snap fit structure can be employed, however, in the embodiment, the engaged portion 51 and the engaging portion 55 have the following structure.

The engaged portion 51 has, for example, a tubular shape such as an approximately cylindrical shape. The engaging portion 55 has, for example, a pillar shape such as an approximately columnar shape. The engaging portion 55 extends to an inner side of the engaged portion 51, and is engaged with the engaged portion 51 from the inner side. Specifically, at an inner periphery side of the engaged portion 51, a projection portion 52 that protrudes to the inner side is provided. In contrast, in a tip portion of the engaging portion 55, for example, a projection portion 56 that protrudes toward an outer side of the engaging portion 55 is provided. The projection portion 56 is caught in the projection portion 52 of the engaged portion 51, so that the engaging portion 55 is engaged with the engaged portion 51 from the inner side.

As illustrated in Figs. 4 and 6, the hydraulic pressure control unit 1 according to the embodiment is provided with at least one connection portion 80 that connects the base 10 to the housing 40. The embodiment indicates an example in which the two connection portions 80 are provided. Moreover, as mentioned above, the housing 40 according to the embodiment is provided with the main body portion 41 and the lid 48. Accordingly, in the embodiment, the connection portions 80 connect the base 10 to the main body portion 41 of the housing 40. The connection portion 80 is provided with a recessed portion 81 formed in the base 10. In the hydraulic pressure control unit 1 according to the embodiment, the main body portion 41 of the housing 40 is connected to the upper surface 18 of the base 10. Accordingly, in the embodiment, the recessed portion 81 is formed in a shape that is recessed downwardly from the upper surface 18 of the base 10. Moreover, the connection portion 80 is provided with the pin 82 that is held by the main body portion 41 of the housing 40, and includes a lower end portion 83 that is press-fitted into the recessed portion 81. In other words, the lower end portion 83 of the pin 82 held by the main body portion 41 of the housing 40 is press-fitted into the recessed portion 81 of the base 10, so that the base 10 and the main body portion 41 of the housing 40 are configured to be connected to each other.

As a connection configuration of a base and a housing in a conventional hydraulic pressure control unit, the connection by a bolt that is a fasten member has been known. Herein, the bolt is provided with an external screw formation portion in which an external screw is formed, and a head portion to which a tool is connected. Further, when the width in a direction perpendicular to an axial direction of the bolt is set as a transverse width, the transverse width of the head portion is large. In other words, downsizing in the conventional hydraulic pressure control unit can be difficult due to the structure of the connection portion that connects the base to the housing in some cases. In contrast, the possibility of the downsizing in the hydraulic pressure control unit 1 according to the embodiment is improved because the connection portion 80 between the base 10 and the housing 40 can be implemented as a compact structure.

Moreover, in the hydraulic pressure control unit 1 according to the embodiment, as mentioned above, the base 10 is bonded to the main body portion 41 of the housing 40. Accordingly, in the hydraulic pressure control unit 1 according to the embodiment, in a case where a force to pull apart the main body portion 41 of the housing 40 from the base 10 acts, the force can be received by an adhesive force of the adhesive that bonds the base 10 to the main body portion 41 of the housing 40, in addition to the connection portion 80. Accordingly, in a case of the configuration in which the base 10 is bonded to the main body portion 41 of the housing 40, compared with a configuration in which the base 10 is not bonded to the main body portion 41 of the housing 40, the pin 82 of the connection portion 80 can be made thinner, and the hydraulic pressure control unit 1 can be downsized.

Moreover, in the embodiment, the hydraulic pressure control unit 1 is provided with a plurality of connection portions 80. Accordingly, in the embodiment, the main body portion 41 of the housing 40 is fixed to the base 10 at two or more locations. Accordingly, when the main body portion 41 of the housing 40 is connected to the base 10 with the connection portions 80, the position of the main body portion 41 of the housing 40 relative to the base 10 can be positioned. Accordingly, the plurality of connection portions 80 are provided to attain easy assembly of the hydraulic pressure control unit 1.

A material for the pin 82 is not specially limited, but the pin 82 may be formed of resin, or the pin 82 may be formed of metal. In a case of the pin 82 made of resin, the pin 82 is an integrally molded article with the housing 40, so that assembly steps of the hydraulic pressure control unit 1 can be reduced. Meanwhile, no creep phenomenon occurs in the pin 82 made of metal, so that in a case where the pin 82 is made of metal, it is possible to prevent a force to connect the main body portion 41 of the housing 40 to the base 10 in the connection portion 80 from lowering as the time elapses.

Moreover, the configuration in which the main body portion 41 of the housing 40 holds the pin 82 is also not specially limited. The pin 82 only needs to be prevented from coming off from the main body portion 41 after the assembly of the hydraulic pressure control unit 1 has been completed, and the pin 82 may be configured to be hooked on a step portion of the main body portion 41, for example. With the configuration in which the pin 82 is sandwiched between the step portion of the main body portion 41 and the base 10, it is possible to prevent the pin 82 from coming off from the main body portion 41 after the assembly of the hydraulic pressure control unit 1 has been completed. Note that, in the embodiment, the pin 82 is fixed to the main body portion 41 of the housing 40 by mold-molding. Specifically, the pin 82 is fixed in a holding portion 45 of the main body portion 41 made of resin by mold-molding. In other words, the holding portion 45 is a portion in which the pin 82 is molded. The pin 82 is fixed to the main body portion 41 of the housing 40 by mold-molding, so that it is possible to cause the main body portion 41 to hold the pin 82 when the main body portion 41 is formed. Accordingly, the pin 82 is fixed to the main body portion 41 of the housing 40 by mold-molding, so that the assembly steps of the hydraulic pressure control unit 1 can be reduced.

Moreover, in the embodiment, the pin 82 is provided with at least one protrusion portion 85 in a portion in the pin 82 that is molded by the main body portion 41 of the housing 40. The protrusion portion 85 protrudes in a direction that is not in parallel with a direction along which the pin 82 is press-fitted into the recessed portion 81. As illustrated in Fig. 6 and other drawings, in the embodiment, the pin 82 is pressed downwardly, and is press-fitted into the recessed portion 81. Accordingly, in the embodiment, the protrusion portion 85 protrudes in the transverse direction. The pin 82 is provided with the protrusion portion 85, so that the pin 82 can be prevented from coming off from the holding portion 45, and the reliability of the connection between the base 10 and the main body portion 41 of the housing 40 is improved.

Moreover, in the embodiment, an end portion at an opposite side of an end portion in the pin 82 that is press-fitted into the recessed portion 81, in other words, an upper end portion 84 of the pin 82 protrudes from the holding portion 45 that is a portion in the main body portion 41 of the housing 40 in which the pin 82 is molded. Accordingly, the pin 82 can be directly pressed, and the pin 82 can be press-fitted into the recessed portion 81, so that the assembly of the hydraulic pressure control unit 1 becomes easy.

Moreover, in the embodiment, the pin 82 is a plate having an approximately uniform thickness in a front-and-rear direction of the plane of paper in Fig. 6. The pin 82 has a plate shape to improve the freedom degree of the elastic deformation of the pin 82, so that the pin 82 can be press-fitted into the recessed portion 81 while absorbing an assembly error of each component of the hydraulic pressure control unit 1.

Moreover, in the embodiment, a through-hole 86 is formed in an end portion of the pin 82 at a side in which the pin 82 is press-fitted into the recessed portion 81, in other words, the lower end portion 83 of the pin 82. As illustrated in Figs. 7 to 9, outer periphery of the through-hole 86 is defined by a first branch portion 83a and a second branch portion 83b, which configure a part of the lower end portion 83, and include both ends that are connected to each other. Accordingly, when the lower end portion 83 of the pin 82 is press-fitted into the recessed portion 81, the lower end portion 83 of the pin 82 can elastically deform in the recessed portion 81. Accordingly, the through-hole 86 is formed in the lower end portion 83 of the plate-like pin 82, so that the lower end portion 83 of the pin 82 is easily press-fitted into the recessed portion 81, and the assembly of the hydraulic pressure control unit 1 becomes easy. As illustrated in Figs. 7 to 9, a reinforcing member 87 independent of the base 10 and the pin 82 is brought into contact with and presses against at least either one of the first branch portion 83a and the second branch portion 83b. With such a configuration, the fixing of the pin 82 after having been press-fitted is reinforced. The reinforcing member 87 is press-fitted into the base 10. With such a configuration, the reinforcing is ensured.

As one example, as illustrated in Fig. 7, the reinforcing member 87 is a spherical body that is press-fitted into a transverse hole 88 extending from an outer surface of the base 10 to the recessed portion 81. In the embodiment, the transverse hole 88 is a hole that opens to one of two opposing side surfaces 19 of the base 10 in a direction orthogonal to the thickness direction of the plate-like pin 82, and includes an axis orthogonal to an axis of the recessed portion 81. The transverse hole 88 only needs to be orthogonal to the recessed portion 81. In other words, the opening of the transverse hole 88 may be formed in another surface of the base 10, such as the upper surface 18 or the other side surface 19, for example. The reinforcing member 87 is press-fitted after the pin 82 has been press-fitted into the recessed portion 81 to connect the base 10 to the housing 40. The reinforcing member 87 is press-fitted to a position at which the reinforcing member 87 is brought into contact with the first branch portion 83a or the second branch portion 83b and applies a pressure force thereto. With such a configuration, the reinforcing is ensured. In particular, in the direction in parallel with the axis of the recessed portion 81, a position at which the reinforcing member 87 is brought into contact with the pin 82 is preferably closer to the upper surface 18 of the base 10, compared with the widest location in the lower end portion 83 of the pin 82. With such a configuration, the reinforcing is ensured. Note that, Fig. 7 illustrates a state where the spherical body serving as the reinforcing member 87 is brought into contact with the second branch portion 83b, however, the spherical body serving as the reinforcing member 87 may be brought into contact with the first branch portion 83a, or separate spherical bodies serving as the reinforcing members 87 may be brought into contact with the first branch portion 83a and the second branch portion 83b, respectively.

As one example, as illustrated in Figs. 8 and 9, the reinforcing member 87 is a pillar body that is press-fitted into the transverse hole 88 extending from the outer surface of the base 10 to the recessed portion 81. The transverse hole 88 penetrates through the recessed portion 81. In the embodiment, the transverse hole 88 is a hole that opens to one of the two opposing side surfaces 19 in a direction in parallel with the thickness direction of the plate-like pin 82 of the base 10, and includes the axis orthogonal to the axis of the recessed portion 81. The transverse hole 88 only needs to be orthogonal to the recessed portion 81. In other words, the opening of the transverse hole 88 may be formed in another surface of the base 10, such as the upper surface 18 or the other side surface 19, for example. The reinforcing member 87 is press-fitted after the pin 82 has been press-fitted into the recessed portion 81 to connect the base 10 to the housing 40. The reinforcing member 87 entirely crosses the recessed portion 81 passing through between the first branch portion 83a and the second branch portion 83b, and is press-fitted to a position at which the reinforcing member 87 is again press-fitted into the transverse hole 88 on the back side of the pin 82. With such a configuration, the reinforcing is ensured. In particular, the reinforcing member 87 may be press-fitted into between the first branch portion 83a and the second branch portion 83b, in other words, into the through-hole 86. With such a configuration, the reinforcing is ensured. Note that, in addition, another transverse hole 88 extending in a direction orthogonal to the thickness direction of the plate-like pin 82 may be formed in the base 10, and as another reinforcing member 87, the spherical body illustrated in Fig. 7 and serving as the reinforcing member 87 may be added.

As illustrated in Figs. 3 to 5, the hydraulic pressure control unit 1 according to the embodiment is provided with at least one stand 90 held by the housing 40. The embodiment indicates an example in which the two stands 90 are provided. Moreover, as mentioned above, the housing 40 according to the embodiment is provided with the main body portion 41 and the lid 48. In the embodiment, the stands 90 are held by the main body portion 41 of the housing 40.

At least a part of the stand 90 is arranged below one portion of the coil housing 65 of the coil unit 60. In a state before the coil unit 60 and the main body portion 41 of the housing 40 are connected to the base 10, the stand 90 supports one portion of the coil housing 65 of the coil unit 60.

In the foregoing, the embodiment has been described, however, the invention is not limited to the description about the embodiment. For example, a part of the description of the embodiment may be executed.

For example, in the foregoing, the case where the reinforcing member 87 is press-fitted into the transverse hole 88 extending from the outer surface of the base 10 to the recessed portion 81 has been described, however, the invention may be such that the reinforcing member 87 reinforces the connection between the base 10 and the housing 40, with another form. In other words, the reinforcing member 87 may be an annular body that is press-fitted into the recessed portion 81, after the lower end portion 83 of the pin 82 has been press-fitted into the recessed portion 81. In such a case, in a state where the reinforcing member 87 surrounds a region that is positioned above the lower end portion 83 in the pin 82, the reinforcing member 87 is brought into contact with and presses against the first branch portion 83a and the second branch portion 83b.

### Reference Signs List

1: Hydraulic pressure control unit
10: Base
11: Master cylinder port
12: Wheel cylinder port
13: Flow path
14: First flow path
15: Second flow path
16: Third flow path
17: Fourth flow path
18: Upper surface
19: Side surface
20: Hydraulic pressure adjusting valve
21: Inlet valve
22: Outlet valve
23: Accumulator
30: Control portion
31: Circuit substrate
40: Housing
41: Main body portion
42: Lower surface portion
42a: Opening portion
43: Upper surface portion
43a: Opening portion
44a: First side surface portion
44b: Second side surface portion
45: Holding portion
48: Lid
50: Lid fixing portion
51: Engaged portion
52: Projection portion
55: Engaging portion
56: Projection portion
60: Coil unit
61: Coil
62: Connection terminal
63: Coil
64: Connection terminal
65: Coil housing
66: Upper surface portion
66a: Upper surface
66b: Notch
67: Lower surface portion
68: Side surface portion
70: Arm
71: Protrusion
80: Connection portion
81: Recessed portion
82: Pin
83: Lower end portion
83a: First branch portion
83b: Second branch portion
84: Upper end portion
85: Protrusion portion
86: Through-hole
87: Reinforcing member
88: Transverse hole
90: Stand
100: Braking system
101: Liquid pipe
102: Liquid pipe
103: Hydraulic pressure sensor
200: Bicycle
210: Frame
211: Head tube
212: Top tube
213: Down tube
214: Seat tube
215: Stay
216: Front fork
217: Front wheel
218: Saddle
219: Pedal
220: Rear wheel
230: Turning portion
231: Steering column
232: Handle-stem
233: Handlebar
240: Braking operation portion
241: Brake lever
242: Master cylinder
243: Reservoir
250: Front wheel braking portion
251: Wheel cylinder
252: Rotor
260: Rear wheel braking portion
270: Power supply unit

## Claims

1. A hydraulic pressure control unit (1) of a braking system (100) for being mounted to a straddle riding-type vehicle (200), the hydraulic pressure control unit (1) comprising:
a base (10) in which a flow path (13) of a brake fluid is formed;
a circuit substrate (31) configured to control driving of a hydraulic pressure adjusting valve (20) to open and close the flow path (13);
a housing (40) in which the circuit substrate (31) is housed; and
a connection portion (80) that connects the base (10) to the housing (40), wherein
the connection portion (80) includes:
a recessed portion (81) that is formed in the base (10); and
a pin (82) that is held by the housing (40), and includes an end portion (83) that is press-fitted into the recessed portion (81),
a through-hole (86) is formed in the end portion (83) that is press-fitted into the recessed portion (81),
an outer periphery of the through-hole (86) is defined by a first branch portion (83a) and a second branch portion (83b), both ends thereof being connected to each other, of the end portion (83) that is press-fitted into the recessed portion (81), and **characterised by**
a reinforcing member (87) independent of the base (10) and the pin (82) is brought into contact with and presses against at least either one of the first branch portion (83a) and the second branch portion (83b).

2. The hydraulic pressure control unit (1) according to claim 1, wherein the reinforcing member (87) is press-fitted into a transverse hole (88) extending from an outer surface of the base (10) to the recessed portion (81).

3. The hydraulic pressure control unit (1) according to claim 2, wherein the reinforcing member (87) is a spherical body that is brought into contact with the first branch portion (83a) or the second branch portion (83b).

4. The hydraulic pressure control unit (1) according to claim 2, wherein the reinforcing member (87) is a pillar body that penetrates between the first branch portion (83a) and the second branch portion (83b).

5. The hydraulic pressure control unit (1) according to any one of claims 1 to 4, wherein the base (10) is bonded to the housing (40).

6. The hydraulic pressure control unit (1) according to any one of claims 1 to 5, wherein a plurality of the connection portions (80) are provided.

7. The hydraulic pressure control unit (1) according to any one of claims 1 to 6, wherein, the pin (82) is made of metal.

8. The hydraulic pressure control unit (1) according to claim 7, wherein the housing (40) is a resin molded article, and the pin (82) is fixed to the housing (40) by mold-molding.

9. The hydraulic pressure control unit (1) according to claim 8, wherein the pin (82) is provided with a protrusion portion (85) that protrudes in a direction not in parallel with a direction in which the pin (82) is press-fitted into the recessed portion (81), in a portion of the pin (82) that is molded by the housing (40).

10. The hydraulic pressure control unit (1) according to claim 8 or 9, wherein an end portion (84) at an opposite side of the end portion (83) that is press-fitted into the recessed portion (81) in the pin (82) protrudes from a portion (45) of the housing (40) that molds the pin (82).

11. The hydraulic pressure control unit (1) according to any one of claims 1 to 6, wherein
the housing (40) is the resin molded article, and
the housing (40) and the pin (82) form an integrally molded article.

12. The hydraulic pressure control unit (1) according to any one of claims 1 to 11, wherein the pin (82) has a plate-like shape.

13. A manufacturing method of a hydraulic pressure control unit (1) of a braking system (100) for being mounted to a straddle riding-type vehicle (200), the hydraulic pressure control unit (1) including a base (10) to which a flow path (13) of a brake fluid is formed, a circuit substrate (31) configured to control driving of a hydraulic pressure adjusting valve (20) to open and close the flow path (13), and a housing (40) in which the circuit substrate (31) is housed, the manufacturing method of the hydraulic pressure control unit (1) comprising:
press-fitting an end portion (83) of a pin (82) held by the housing (40) into a recessed portion (81) formed in the base (10) to connect the base (10) to the housing (40);
forming a through-hole (86) in the end portion (83) that is press-fitted into the recessed portion (81);
defining an outer periphery of the through-hole (86) by a first branch portion (83a) and a second branch portion (83b), both ends thereof being connected to each other, of the end portion (83) that is press-fitted into the recessed portion (81); and
press-fitting a reinforcing member (87) independent of the base (10) and the pin (82) into a transverse hole (88) extending from an outer surface of the base (10) to the recessed portion (81) into which the end portion (83) is press-fitted, and bringing and pressing the reinforcing member (87) into contact with and against at least either one of the first branch portion (83a) and the second branch portion (83b).

## Patentansprüche

1. Hydraulische Drucksteuereinheit (1) eines Bremssystems (100) zur Montage an einem Fahrzeug (200) vom Sattelsitz-Typ, wobei die hydraulische Drucksteuereinheit (1) umfasst:
eine Basis (10), in der ein Strömungsweg (13) für ein Bremsfluid gebildet ist,
ein Schaltungssubstrat (31), gestaltet zum Steuern des Ansteuerns eines hydraulischen Druckeinstellventils (20) zum Öffnen und Schließen des Strömungswegs (13);
ein Gehäuse (40), in dem das Schaltungssubstrat (31) untergebracht ist; und
einen Verbindungsabschnitt (80), der die Basis (10) mit dem Gehäuse (40) verbindet, wobei
der Verbindungsabschnitt (80) enthält:
einen vertieften Abschnitt (81), der in der Basis (10) gebildet ist; und
einen Stift (82), der von dem Gehäuse (40) gehalten wird und einen Endabschnitt (83) aufweist, der in den vertieften Abschnitt (81) eingepresst ist,
ein Durchgangsloch (86), das in dem Endabschnitt (83), der in den vertieften Abschnitt (81) eingepresst ist, gebildet ist,
wobei ein Außenumfang des Durchgangslochs (86) von einem ersten Zweigabschnitt (83a) und einem zweiten Zweigabschnitt (83b) des Endabschnitts (83), der in den vertieften Abschnitt (81) eingepresst ist, definiert wird, wobei beide Enden davon miteinander verbunden sind, und **gekennzeichnet durch**
ein von der Basis (10) und dem Stift (82) unabhängiges Verstärkungselement (87), das mit wenigstens einem von dem ersten Zweigabschnitt (83a) und dem zweiten Zweigabschnitt (83b) in Kontakt gebracht wird und dagegen drückt.

2. Hydraulische Drucksteuereinheit (1) nach Anspruch 1, wobei das Verstärkungselement (87) in ein Querloch (88) eingepresst ist, das von einer Außenfläche der Basis (10) zu dem vertieften Abschnitt (81) verläuft.

3. Hydraulische Drucksteuereinheit (1) nach Anspruch 2, wobei das Verstärkungselement (87) ein kugelförmiger Körper ist, der mit dem ersten Zweigabschnitt (83a) oder dem zweiten Zweigabschnitt (83b) in Kontakt gebracht wird.

4. Hydraulische Drucksteuereinheit (1) nach Anspruch 2, wobei das Verstärkungselement (87) ein Säulenkörper ist, der zwischen den ersten Zweigabschnitt (83a) und den zweiten Zweigabschnitt (83b) eindringt.

5. Hydraulische Drucksteuereinheit (1) nach einem der Ansprüche 1 bis 4, wobei die Basis (10) an das Gehäuse (40) gebunden ist.

6. Hydraulische Drucksteuereinheit (1) nach einem der Ansprüche 1 bis 5, wobei eine Mehrzahl der Verbindungsabschnitte (80) bereitgestellt ist.

7. Hydraulische Drucksteuereinheit (1) nach einem der Ansprüche 1 bis 6, wobei der Stift (82) aus Metall besteht.

8. Hydraulische Drucksteuereinheit (1) nach Anspruch 7, wobei das Gehäuse (40) ein Harz-Formkörper ist und der Stift (82) durch Spritzguss an dem Gehäuse (40) befestigt ist.

9. Hydraulische Drucksteuereinheit (1) nach Anspruch 8, wobei der Stift (82) in einem Abschnitt des Stifts (82), der von dem Gehäuse (40) geformt wird, mit einem vorstehenden Teil (85) versehen ist, der in einer Richtung vorsteht, die nicht parallel zu einer Richtung ist, in der der Stift (82) in den vertieften Abschnitt (81) eingepresst ist.

10. Hydraulische Drucksteuereinheit (1) nach Anspruch 8 oder 9, wobei ein Endabschnitt (84) des Stifts (82) an einer gegenüberliegenden Seite des Endabschnitts (83), der in den vertieften Abschnitt (81) eingepresst ist, von einem Abschnitt (45) des Gehäuses (40), der den Stift (82) formt, vorsteht.

11. Hydraulische Drucksteuereinheit (1) nach einem der Ansprüche 1 bis 6, wobei
das Gehäuse (40) der Harz-Formkörper ist, und
das Gehäuse (40) und der Stift (82) einen integral geformten Gegenstand bilden.

12. Hydraulische Drucksteuereinheit (1) nach einem der Ansprüche 1 bis 11, wobei der Stift (82) eine plattenartige Form aufweist.

13. Verfahren zur Herstellung einer hydraulischen Drucksteuereinheit (1) eines Bremssystems (100) zum Montieren an einem Fahrzeug (200) vom Sattelsitz-Typ, wobei die hydraulische Drucksteuereinheit (1) eine Basis (10), zu der ein Strömungsweg (13) eines Bremsfluids gebildet ist, ein Schaltungssubstrat (31), das dafür gestaltet ist, Ansteuern eines hydraulischen Druckeinstellventils (20) zu steuern, um den Strömungsweg (13) zu öffnen und zu schließen, und ein Gehäuse (40), in dem das Schaltungssubstrat (31) untergebracht ist, enthält, wobei das Verfahren zur Herstellung der hydraulischen Drucksteuereinheit (1) umfasst:
Einpressen eines Endabschnitts (83) eines Stifts (82), der von dem Gehäuse (40) gehalten wird, in einen vertieften Abschnitt (81), der in der Basis (10) gebildet ist, um die Basis (10) mit dem Gehäuse (40) zu verbinden;
Bilden eines Durchgangslochs (86) in dem Endabschnitt (83), der in den vertieften Abschnitt (81) eingepresst ist;
Definieren eines Außenumfangs des Durchgangslochs (86) durch einen ersten Zweigabschnitt (83a) und einen zweiten Zweigabschnitt (83b) des Endabschnitts (83), der in den vertieften Abschnitt (81) eingepresst ist, wobei beide Enden davon miteinander verbunden sind; und
Einpressen eines Verstärkungselements (87) unabhängig von der Basis (10) und dem Stift (82) in ein Querloch (88), das von einer Außenfläche der Basis (10) zu dem vertieften Abschnitt (81) verläuft, in den der Endabschnitt (83) eingepresst ist, und Inkontaktbringen und -pressen des Verstärkungselements (87) mit und gegen wenigstens einen von dem ersten Zweigabschnitt (83a) und dem zweiten Zweigabschnitt (83b).

## Revendications

1. Unité de contrôle de pression hydraulique (1) d'un système de freinage (100) destinée à être montée sur un véhicule de type à enfourcher (200), l'unité de contrôle de pression hydraulique (1) comprenant :
une base (10) dans laquelle est formé un trajet d'écoulement (13) d'un liquide de frein ;
un substrat de circuit (31) conçu pour contrôler l'entraînement d'une soupape de réglage de pression hydraulique (20) pour ouvrir et fermer le trajet d'écoulement (13) ;
un boîtier (40) dans lequel est logé le substrat de circuit (31) ; et
une partie de liaison (80) qui relie la base (10) au boîtier (40), la partie de liaison (80) comprenant :
une partie évidée (81) qui est formée dans la base (10) ; et
une broche (82) qui est maintenue par le boîtier (40) et comprend une partie d'extrémité (83) qui est emmanchée à force dans la partie évidée (81),
un trou traversant (86) étant formé dans la partie d'extrémité (83) qui est emmanchée à force dans la partie évidée (81),
une périphérie extérieure du trou traversant (86) étant définie par une première partie de branche (83a) et une seconde partie de branche (83b), leurs deux extrémités étant reliées l'une à l'autre, de la partie d'extrémité (83) qui est emmanchée à force dans la partie évidée (81), et **caractérisée par**
un élément de renforcement (87) indépendant de la base (10) et de la broche (82) est amené en contact avec au moins l'une parmi la première partie de branche (83a) et la seconde partie de branche (83b) et exerce une pression contre celle-ci.

2. Unité de contrôle de pression hydraulique (1) selon la revendication 1, l'élément de renforcement (87) étant emmanché à force dans un trou transversal (88) s'étendant d'une surface extérieure de la base (10) à la partie évidée (81).

3. Unité de contrôle de pression hydraulique (1) selon la revendication 2, l'élément de renforcement (87) étant un corps sphérique qui est amené en contact avec la première partie de branche (83a) ou la seconde partie de branche (83b).

4. Unité de contrôle de pression hydraulique (1) selon la revendication 2, l'élément de renforcement (87) étant un corps de pilier qui pénètre entre la première partie de branche (83a) et la seconde partie de branche (83b).

5. Unité de contrôle de pression hydraulique (1) selon l'une quelconque des revendications 1 à 4, la base (10) étant liée au boîtier (40).

6. Unité de contrôle de pression hydraulique (1) selon l'une quelconque des revendications 1 à 5, une pluralité des parties de liaison (80) étant fournie.

7. Unité de contrôle de pression hydraulique (1) selon l'une quelconque des revendications 1 à 6, la broche (82) étant en métal.

8. Unité de contrôle de pression hydraulique (1) selon la revendication 7, le boîtier (40) étant un article moulé en résine, et la broche (82) étant fixée au boîtier (40) par moulage.

9. Unité de contrôle de pression hydraulique (1) selon la revendication 8, la broche (82) étant pourvue d'une partie en saillie (85) qui fait saillie dans une direction non parallèle à une direction dans laquelle la broche (82) est emmanchée à force dans la partie évidée (81), dans une partie de la broche (82) qui est moulée par le boîtier (40).

10. Unité de contrôle de pression hydraulique (1) selon la revendication 8 ou 9, une partie d'extrémité (84) au niveau d'un côté opposé de la partie d'extrémité (83) qui est emmanchée à force dans la partie évidée (81) dans la broche (82) faisant saillie d'une partie (45) du boîtier (40) qui moule la broche (82).

11. Unité de contrôle de pression hydraulique (1) selon l'une quelconque des revendications 1 à 6,
le boîtier (40) étant l'article moulé en résine, et
le boîtier (40) et la broche (82) formant un article moulé d'une seule pièce.

12. Unité de contrôle de pression hydraulique (1) selon l'une quelconque des revendications 1 à 11, la broche (82) ayant une forme analogue à une plaque.

13. Procédé de fabrication d'une unité de contrôle de pression hydraulique (1) d'un système de freinage (100) destinée à être montée sur un véhicule de type à enfourcher (200), l'unité de contrôle de pression hydraulique (1) comprenant une base (10) sur laquelle est formé un trajet d'écoulement (13) d'un liquide de frein, un substrat de circuit (31) conçu pour contrôler l'entraînement d'une soupape de réglage de pression hydraulique (20) pour ouvrir et fermer le trajet d'écoulement (13), et un boîtier (40) dans lequel est logé le substrat de circuit (31), le procédé de fabrication de l'unité de contrôle de pression hydraulique (1) comprenant les étapes consistant à :
emmancher à force une partie d'extrémité (83) d'une broche (82) maintenue par le boîtier (40) dans une partie évidée (81) formée dans la base (10) pour relier la base (10) au boîtier (40) ;
former un trou traversant (86) dans la partie d'extrémité (83) qui est emmanchée à force dans la partie évidée (81) ;
définir une périphérie extérieure du trou traversant (86) par une première partie de branche (83a) et une seconde partie de branche (83b), leurs deux extrémités étant reliées l'une à l'autre, de la partie d'extrémité (83) qui est emmanchée à force dans la partie évidée (81), et
emmancher à force un élément de renforcement (87) indépendant de la base (10) et de la broche (82) dans un trou transversal (88) s'étendant d'une surface extérieure de la base (10) à la partie évidée (81) dans laquelle la partie d'extrémité (83) est emmanchée à force, et amener et presser l'élément de renforcement (87) en contact avec et contre au moins l'une de la première partie de branche (83a) et de la seconde partie de branche (83b).
